(19) Europäisches Patentamt
European Patent Office
Office européen des brevets

(11) **EP 3 674 739 A1**

(12) **DEMANDE DE BREVET EUROPEEN**

(43) Date de publication:
**01.07.2020 Bulletin 2020/27**

(51) Int Cl.:
**G01S 3/14** $^{(2006.01)}$      **G01S 3/04** $^{(2006.01)}$
**G01S 3/74** $^{(2006.01)}$      **H01Q 3/26** $^{(2006.01)}$

(21) Numéro de dépôt: **19220294.3**

(22) Date de dépôt: **31.12.2019**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats d'extension désignés:
**BA ME**
Etats de validation désignés:
**KH MA MD TN**

(30) Priorité: **31.12.2018 FR 1874398**

(71) Demandeur: **Avantix**
**13100 Aix-en-Provence (FR)**

(72) Inventeur: **BOURGOIN, Hugo**
**13100 Aix en Provence (FR)**

(74) Mandataire: **Cabinet Camus Lebkiri**
**25 rue de Maubeuge**
**75009 Paris (FR)**

(54) **PROCEDE DE DETERMINATION CONJOINTE DE LA DIRECTION D'ARRIVEE ET DE LA POLARISATION D'UN SIGNAL**

(57) Un aspect de l'invention concerne un procédé de détermination d'une polarisation et d'une direction d'arrivée, parmi un ensemble de directions d'arrivée, d'un signal émis à une fréquence comprise dans une gamme de fréquences, le procédé étant mis en œuvre par un dispositif comportant une unité de calcul et un réseau antennaire comprenant une pluralité d'antennes, possédant un repère pour chaque direction d'arrivée et pour chaque fréquence de la gamme de fréquences, le procédé comportant les étapes suivantes :

- pour chaque antenne, recevoir, numériser et transmettre le signal numérisé à l'unité de calcul ;
- estimer la fréquence du signal ;
- regrouper les signaux numérisés dans un vecteur de signaux numérisés H ;

- pour chaque direction d'arrivée :
∘ décomposer chaque signal numérisé sur le repère correspondant à la direction d'arrivée et à la fréquence estimée ;
∘ regrouper la décomposition de chaque signal numérisé suivant un premier axe du repère dans un premier vecteur, regrouper la décomposition de chaque signal numérisé suivant un second axe du repère dans un second vecteur et créer une matrice X comportant une première ligne correspondant au premier vecteur et une seconde ligne correspondant au second vecteur ;
- déterminer la direction d'arrivée et la polarisation du signal à l'aide du vecteur de signaux numérisés H et de la matrice X de chaque direction d'arrivée de l'ensemble de directions d'arrivée.

[Fig. 2]

EP 3 674 739 A1

**Description**

**DOMAINE TECHNIQUE DE L'INVENTION**

Le domaine technique de l'invention est celui de la détermination de la direction d'arrivée et de la polarisation d'un signal et plus particulièrement de la détermination conjointe de la direction d'arrivée et de la polarisation d'un signal.

La présente invention concerne un procédé de détermination de la polarisation et de la direction d'arrivée et en particulier un procédé de détermination conjointe de la polarisation et de la direction d'arrivée. La présente invention concerne également un dispositif permettant de mettre en œuvre le procédé selon l'invention.

**ARRIERE-PLAN TECHNOLOGIQUE DE L'INVENTION**

Les algorithmes de détection classiques détectent des émetteurs radioélectriques en étudiant la puissance du signal reçu par un dispositif d'acquisition comportant une ou plusieurs antennes. En effet, en l'absence d'émetteurs, la valeur de la puissance du signal reçu est plus faible qu'en présence d'un émetteur et donc, en choisissant un seuil adapté, on peut détecter la présence d'un émetteur par seuillage de la puissance du signal reçu.

La détection d'un émetteur est souvent suivie d'une étude visant à déterminer les caractéristiques du signal reçu, comme sa direction d'arrivée ou encore sa polarisation, pour caractériser l'émetteur.

Il existe de nombreux algorithmes permettant de déterminer de manière précise la direction d'arrivée d'un signal reçu. Certains, comme l'algorithme de formation de voies, ont besoin de la polarisation du signal reçu, d'autres, comme par exemple l'algorithme ESPRIT ou l'algorithme MUSIC, peuvent déterminer la direction d'arrivée quelle que soit la polarisation du signal. Dans tous les cas, l'analyse de la polarisation et l'analyse de la direction d'arrivée sont réalisées successivement et non conjointement, ce qui mobilise plus de ressources de calcul et prend plus de temps.

Il existe donc un besoin d'un algorithme permettant de déterminer conjointement et de manière précise la direction d'arrivée et la polarisation d'un signal reçu.

**RESUME DE L'INVENTION**

L'invention offre une solution aux problèmes évoqués précédemment, en proposant un algorithme capable de déterminer précisément et conjointement la direction d'arrivée et la polarisation d'un signal reçu.

Un premier aspect de l'invention concerne un procédé de détermination d'une polarisation et d'une direction d'arrivée parmi un ensemble de directions d'arrivée, d'un signal émis par un émetteur à une fréquence comprise dans une gamme de fréquences, le procédé étant mis en œuvre par un dispositif comportant une unité de calcul et un réseau antennaire comprenant une pluralité d'antennes configurées pour réaliser l'acquisition en simultané du signal et à recevoir et transmettre en simultané le signal acquis sous forme numérique à l'unité de calcul, le réseau antennaire possédant un repère pour chaque direction d'arrivée de l'ensemble de directions d'arrivée et pour chaque fréquence de la gamme de fréquences, chaque repère comportant un premier axe et un second axe, le procédé comportant les étapes suivantes :

- pour chaque antenne du réseau antennaire :
  ◦ recevoir, numériser le signal et transmettre le signal numérisé à l'unité de calcul ;
- estimer la fréquence du signal à partir d'au moins un signal numérisé ;
- regrouper les signaux numérisés au sein d'un vecteur de signaux numérisés H ;
- pour chaque direction d'arrivée de l'ensemble de directions d'arrivée :

  ◦ décomposer chaque signal numérisé sur le repère correspondant à la direction d'arrivée et à la fréquence estimée ;
  ◦ regrouper la décomposition de chaque signal numérisé suivant le premier axe du repère dans un premier vecteur, regrouper la décomposition de chaque signal numérisé suivant le second axe du repère dans un second vecteur et créer une matrice X comportant une première ligne correspondant au premier vecteur et une seconde ligne correspondant au second vecteur ;

- déterminer la direction d'arrivée et la polarisation du signal à l'aide du vecteur de signaux numérisés H et de la matrice X de chaque direction d'arrivée de l'ensemble de directions d'arrivée.

Grâce à l'invention, la direction d'arrivée et la polarisation du signal reçu sont déterminées conjointement par le biais du vecteur de signaux numérisés H et de la matrice X de chaque direction d'arrivée de l'ensemble de directions d'arrivée.

Outre les caractéristiques qui viennent d'être évoquées dans le paragraphe précédent, le procédé selon un premier aspect de l'invention peut présenter une ou plusieurs caractéristiques complémentaires parmi les suivantes, considérées individuellement ou selon toutes les combinaisons techniquement possibles.

Selon un mode de réalisation, l'étape de détermination de la direction d'arrivée et de la polarisation du signal comporte les sous-étapes suivantes :

- pour chaque direction d'arrivée de l'ensemble de directions d'arrivée :

  ○ calculer la matrice C se définissant comme : $C = (XX^*)^{-1} XH^*HX^*$ ;
  ○ calculer la trace de la matrice C ;

- déterminer la direction d'arrivée du signal se définissant comme la direction d'arrivée de la matrice C de trace maximale ;
- déterminer la polarisation du signal à partir de la matrice C correspondant à la direction d'arrivée du signal.

Ainsi, la direction d'arrivée et la polarisation du signal reçu sont déterminées conjointement par le biais de la matrice C de trace maximale.

Selon un premier exemple de réalisation compatible avec le mode de réalisation précédent, l'étape d'estimation de la fréquence du signal est réalisée en calculant la transformée de Fourier d'au moins un signal numérisé.

Ainsi, l'estimation de la fréquence du signal est rapide.

Selon un deuxième exemple de réalisation non compatible avec le premier exemple de réalisation et compatible avec le mode de réalisation précédent, l'étape d'estimation de la fréquence du signal est réalisée en calculant l'intercorrélation des spectrogrammes de plusieurs signaux numérisés.

Ainsi, l'estimation de la fréquence du signal est très précise.

Selon un mode de réalisation compatible avec les modes et exemples de réalisation précédents, l'ensemble des directions d'arrivée comporte une pluralité de directions d'arrivée séparées deux à deux par un pas angulaire donné.

Ainsi, les directions d'arrivée de l'ensemble de directions d'arrivée sont réparties uniformément sur une zone angulaire donnée.

Selon un mode de réalisation compatible avec les modes et exemples de réalisation précédents, la polarisation peut être linéaire ou circulaire.

Un deuxième aspect de l'invention concerne un dispositif permettant la mise en œuvre du procédé selon un premier aspect de l'invention, caractérisé en ce qu'il comporte :

- un réseau antennaire comportant une pluralité d'antennes configurées pour recevoir simultanément et à numériser des signaux pour les transmettre à une unité de calcul sous forme de signaux numérisés ;
- une unité de calcul configurée pour réaliser des fonctions de calcul et de détection sur des signaux numérisés.

Un troisième aspect de l'invention concerne un produit programme d'ordinateur comprenant des instructions qui, lorsque le programme est exécuté par un ordinateur, conduisent celui-ci à mettre en œuvre toutes les étapes du procédé selon un premier aspect de l'invention, exceptée l'étape d'acquisition et de numérisation.

Un quatrième aspect de l'invention concerne un support d'enregistrement lisible par ordinateur comprenant des instructions qui, lorsqu'elles sont exécutées par un ordinateur, conduisent celui-ci à mettre en œuvre toutes les étapes du procédé selon un premier aspect de l'invention, exceptée l'étape d'acquisition et de numérisation.

L'invention et ses différentes applications seront mieux comprises à la lecture de la description qui suit et à l'examen des figures qui l'accompagnent.

**BREVE DESCRIPTION DES FIGURES**

Les figures sont présentées à titre indicatif et nullement limitatif de l'invention.

- La figure 1 montre un schéma synoptique d'un procédé selon un premier aspect de l'invention.
- La figure 2 montre une représentation schématique d'un dispositif selon un deuxième aspect de l'invention.
- La figure 3 montre une représentation schématique du champ électrique d'une onde polarisée elliptiquement.
- La figure 4 montre le spectre d'un signal S.

**DESCRIPTION DETAILLEE D'AU MOINS UN MODE DE REALISATION DE L'INVENTION**

Sauf précision contraire, un même élément apparaissant sur des figures différentes présente une référence unique.

Un premier aspect de l'invention concerne un procédé de détermination de la polarisation et de la direction d'arrivée d'un signal émis par un émetteur dans un environnement proche d'un dispositif selon un deuxième aspect de l'invention, permettant la mise en œuvre du procédé selon un premier aspect de l'invention.

Par « environnement proche », on entend une zone circulaire entourant le dispositif selon un deuxième aspect de l'invention.

Par « émetteur », on entend un dispositif qui émet des signaux sous forme d'ondes électromagnétiques. Les ondes électromagnétiques sont par exemple de type radio ou de type radar.

Le signal peut être caractérisé par une fréquence, une direction d'arrivée et une polarisation.

La polarisation d'un signal peut être de plusieurs types, comme par exemple de type linéaire, circulaire droite ou circulaire gauche. Tous ces types de polarisation sont des cas particuliers de polarisation elliptique.

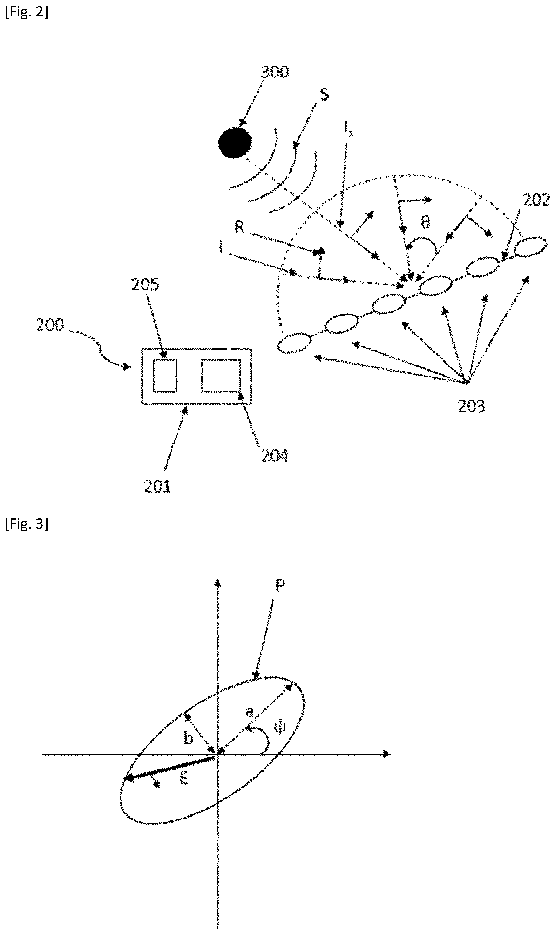

[Fig 3] montre une représentation schématique du champ électrique d'une onde polarisée elliptiquement.

La pointe du vecteur du champ électrique E de l'onde trace une ellipse caractérisée par un demi-grand axe a, un demi-petit axe b et un angle d'orientation $\psi$.

Les polarisations linéaire, circulaire gauche et circulaire droite sont des polarisations elliptiques avec des valeurs particulières de demi-grand axe a et de demi-petit axe b résumées dans le tableau suivant.

[Tableaux 1]

| Type de polarisation | Valeur de a | Valeur de b |
|---|---|---|
| Polarisation linéaire | 1 | 0 |
| Polarisation circulaire gauche | $\dfrac{1}{\sqrt{2}}$ | $\dfrac{1}{\sqrt{2}}$ |
| Polarisation circulaire droite | $\dfrac{1}{\sqrt{2}}$ | $\dfrac{1}{\sqrt{2}}$ |

Dans le contexte de l'invention, déterminer la polarisation P du signal revient à déterminer le type de polarisation et ses paramètres, par exemple une polarisation elliptique caractérisée par les paramètres a, b et $\psi$.

Le procédé 100 selon un premier aspect de l'invention comporte six étapes 101, 102, 103, 104, 105, 110.

La dernière étape 110 du procédé 100 comporte par exemple quatre sous-étapes 106, 107, 108, 109.

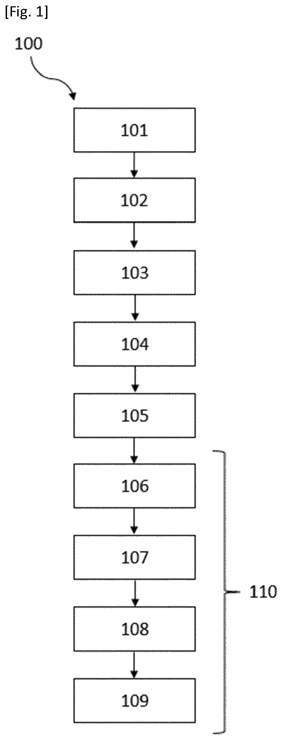

[Fig 1] montre un schéma synoptique illustrant les étapes 101 à 109 du procédé 100 selon un premier aspect de l'invention, selon un exemple de réalisation.

[Fig 2] montre une représentation schématique du dispositif 200 selon un deuxième aspect de l'invention.

Le dispositif 200 comporte une unité de calcul 201 réalisant les étapes 102 à 109 du procédé 100 selon l'exemple de réalisation illustré à la figure 1 et un réseau antennaire 202 réalisant l'étape 101 d'acquisition et de numérisation du procédé 100 selon un premier aspect de l'invention.

Le réseau antennaire 202 comporte N antennes 203, N étant strictement supérieur à 1.

Sur la figure 2, le réseau antennaire 202 présente six antennes 203 qui captent en même temps le signal S en provenance de l'environnement proche, c'est-à-dire que chaque antenne 203 reçoit un signal S différent mais que l'acquisition est déclenchée simultanément pour toutes les antennes 203.

On entend par « antenne » 203, un dispositif comportant un élément antennaire capable de capter des signaux de son environnement et un convertisseur analogique numérique capable de numériser un signal.

Le signal S reçu par chaque antenne 203 est ensuite numérisé de manière à ce que tous les signaux S reçus par les antennes 203 soient numérisés simultanément. Après numérisation, chaque antenne 203 transmet le signal numérisé obtenu après numérisation du signal S à l'unité de calcul 201.

Le signal numérisé obtenu par la n-ème antenne 203 du réseau antennaire 203 est noté $S_n$. Ainsi, dans le cas de la figure 2, le signal numérisé obtenu par la troisième antenne 203 du réseau antennaire est noté $S_3$.

Dans la présente demande, « unité de calcul » renvoie à un dispositif possédant des moyens de stockage 204 et des moyens de calculs 205 sur les signaux numérisés. Des moyens de stockage peuvent par exemple être un disque dur, une mémoire SSD ou une mémoire Flash simple ou à grille, locale ou distante. Des moyens de calcul peuvent être un microprocesseur ou un circuit logique programmable comme un FPGA (pour « Field-Programmable Gâte Array »).

Après réception des signaux numérisés, l'unité de calcul 201 met en œuvre les étapes 102 à 109 du procédé 100 selon l'exemple de réalisation illustré à la figure 1.

La deuxième étape 102 du procédé 100 consiste à estimer la fréquence du signal S.

La deuxième étape 102 du procédé 100 peut par exemple être réalisée en appliquant une transformée de Fourier à l'un des signaux numérisés pour obtenir son spectre.

On entend par « spectre d'un signal », l'amplitude du signal en fonction de la fréquence.

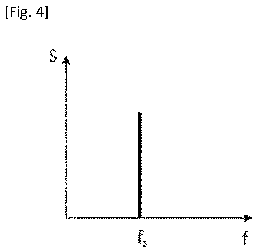

[Fig 4] montre une représentation schématique du spectre du signal S de fréquence fs.

La deuxième étape 102 du procédé 100 peut également être réalisée en calculant le spectrogramme de chaque signal numérisé, puis en évaluant l'intercorrélation entre les spectrogrammes.

On entend par « spectrogramme », un diagramme temps-fréquence indiquant pour chaque intervalle de temps et chaque spectre, l'amplitude et la phase du signal numérisé.

A l'issue de la deuxième étape 102 du procédé 100, la fréquence fs du signal S est déterminée.

La troisième étape 103 du procédé 100 consiste à rassembler les signaux numérisés au sein d'un vecteur H se définissant comme :

[Math. 1]

$$H(S) = (S_n)_{n=1...N}$$

Par exemple, si le réseau antennaire 202 comporte six antennes 203, comme dans le cas de la figure 2, le vecteur H s'écrit :

[Math. 2]

$$H(S) = [S_1 \, S_2 \, S_3 \, S_4 \, S_5 \, S_6]$$

Le vecteur H est un vecteur de dimension N.

Les étapes 104 à 107 du procédé 100 sont ensuite réalisées pour chaque direction d'arrivée i d'un ensemble de directions d'arrivées prédéfini.

L'ensemble de directions d'arrivées correspond à un nombre fini de directions d'arrivée i comprises dans une zone angulaire d'acquisition du réseau antennaire 202.

Dans l'exemple de la figure 2, les antennes 203 sont uniquement capables d'acquérir les signaux dont la direction d'arrivée i est comprise dans un demi-cercle représenté en pointillés, correspondant à une zone angulaire d'acquisition de 180°.

Les directions d'arrivée i de l'ensemble de directions d'arrivée sont par exemple choisies de manière à être espacées d'un même pas angulaire θ deux à deux.

Sur la figure 2, l'ensemble de directions d'arrivée comporte quatre directions d'arrivée i espacées deux à deux d'un pas angulaire θ de 45°.

L'ensemble de directions d'arrivée peut par exemple correspondre à 72 directions d'arrivée i correspondant à des directions d'arrivée réparties sur une zone angulaire de 360 ° et espacées deux à deux d'un pas angulaire de 5°.

L'ensemble de directions d'arrivée peut par exemple correspondre à 360 directions d'arrivée i correspondant à des directions d'arrivée réparties sur une zone angulaire de 360 ° et espacées deux à deux d'un pas angulaire de 1°.

A chacune des directions d'arrivée i de l'ensemble des directions d'arrivée est associée une pluralité de repères R, chaque repère R correspondant à une fréquence appartenant à une gamme de fréquence prédéfinie dans laquelle est comprise la fréquence fs du signal S.

La gamme de fréquence est par exemple la gamme de fréquences radio ou encore la gamme de fréquences radar.

Ainsi, chaque direction d'arrivée i de l'ensemble des directions d'arrivée est associée à un unique repère R correspondant à la fréquence estimée $f_s$ du signal S. Cet unique repère R comporte un premier axe nommé par la suite axe horizontal et un second axe nommé par la suite axe vertical.

La quatrième étape 104 du procédé 100 consiste à décomposer chaque signal numérisé sur le repère R correspondant à la direction d'arrivée i de l'ensemble de directions d'arrivée traitée et à la fréquence estimée fs.

A l'issue de la quatrième étape 104 du procédé 100, une décomposition selon l'axe horizontal et une décomposition selon l'axe vertical sont obtenues pour chaque signal numérisé.

Par exemple, si le réseau antennaire 202 comporte six antennes 203, comme dans le cas de la figure 6, six décompositions selon l'axe horizontal $S_1^H \, S_2^H \, S_3^H \, S_4^H \, S_5^H \, S_6^H$ et six décompositions selon l'axe vertical $S_1^V \, S_2^V \, S_3^V \, S_4^V \, S_5^V \, S_6^V$ sont obtenues.

La cinquième étape 105 du procédé 100 consiste à rassembler les décompositions selon l'axe horizontal au sein d'un premier vecteur d'une part, et les décompositions selon l'axe vertical au sein d'un second vecteur d'autre part, et de créer une matrice X comportant une première ligne constituée du premier vecteur et une seconde ligne constituée du second vecteur.

Par exemple, si le réseau antennaire 202 comporte six antennes 203, comme dans le cas de la figure 2, la matrice X s'exprime ainsi :

[Math. 3]

$$X(f_S, i) = \begin{bmatrix} S_1^H & S_2^H & S_3^H & S_4^H & S_5^H & S_6^H \\ S_1^V & S_2^V & S_3^V & S_4^V & S_5^V & S_6^V \end{bmatrix}$$

La matrice X est une matrice comportant deux lignes et N colonnes.

La sixième étape 106 du procédé 100 selon l'exemple de réalisation illustré à la figure 1 consiste à calculer la matrice C se définissant comme :

[Math. 4]

$$C(f_S, i) = \left(X(f_S, i)X(f_S, i)^*\right)^{-1} X(f_S, i)\left(H(S)^* H(S)\right)X(f_S, i)^*$$

Avec X* correspondant à la transformée conjuguée de la matrice X.

La matrice C est une matrice comportant deux lignes et deux colonnes.

A l'issue de la sixième étape 106 du procédé 100 selon l'exemple de réalisation illustré à la figure 1, une matrice C est obtenue pour chaque direction d'arrivée i de l'ensemble des directions d'arrivée. Ainsi, dans le cas de la figure 2, quatre matrices C sont obtenues.

La septième étape 107 du procédé selon l'exemple de réalisation illustré à la figure 1 consiste à calculer la trace de chaque matrice C précédemment obtenues.

On rappelle que la trace d'une matrice correspond à la somme de ces éléments diagonaux.

A l'issue de la septième étape 107 du procédé 100, le calcul de la trace de chaque matrice C calculées à la sixième étape 106 du procédé 100 selon l'exemple de réalisation illustré à la figure 1 sont obtenues. Ainsi, dans le cas de la figure 2, on dispose de quatre calculs de trace, correspondant chacun à une matrice C, correspondant elles-mêmes chacune à une direction d'arrivée i de l'ensemble de directions d'arrivée.

La huitième étape 108 du procédé 100 selon l'exemple de réalisation illustré à la figure 1 consiste à déterminer la direction d'arrivée is du signal S parmi les directions d'arrivée i de l'ensemble des directions d'arrivée.

Pour cela, les traces calculées à la septième étape 107 du procédé 100 sont comparées pour déterminer la trace maximale.

La direction d'arrivée i de l'ensemble des directions d'arrivée correspondant à la trace maximale est la direction d'arrivée is du signal S.

La neuvième étape 109 du procédé selon l'exemple de réalisation illustré à la figure 1 consiste alors à déterminer la polarisation P du signal S, c'est-à-dire le type de polarisation et ses paramètres, à partir de la matrice C correspondant à la direction d'arrivée is du signal S.

Pour cela, une matrice de polarisation A est définie. En partant du cas général de la polarisation elliptique comme représentée à la figure 3, la matrice A s'écrit :

[Math. 5]

$$A(\psi, a, b) = \overline{E}(a, b)Q(\psi)$$

Avec :

[Math. 6]

$$Q(\psi) = \begin{bmatrix} \cos(\psi) & -\sin(\psi) \\ \sin(\psi) & \cos(\psi) \end{bmatrix}$$

[Math. 7]

$$\overline{E}(a, b) = \begin{bmatrix} a & ib \end{bmatrix}$$

Le vecteur H dépend de la matrice A selon la relation suivante :

[Math. 8]

$$H(S) = A(\psi, a, b)X(f_S, i)$$

Or :

[Math. 8]

$$C(f_S, i) = (X(f_S, i)X(f_S, i)^*)^{-1}X(f_S, i)\big(H(S)^*H(S)\big)X(f_S, i)^*$$

Donc, en remplaçant H par son expression en fonction de A, la matrice C s'exprime de la manière suivante :

[Math. 9]

$$C(f_S, i) = (X(f_S, i)X(f_S, i)^*)^{-1}X(f_S, i)X(f_S, i)^*A(\psi, a, b)^*A(\psi, a, b)X(f_S, i)X(f_S, i)^*$$

En simplifiant l'expression précédente, on obtient :

[Math. 10]

$$C(\psi, a, b) = A(\psi, a, b)^*A(\psi, a, b)X(f_S, i)X(f_S, i)^*$$

La matrice C dépend donc uniquement des paramètres de polarisation a, b et $\psi$ et en remplaçant la matrice A par son expression, on obtient :

[Math. 11]

$$C(\psi, a, b) = \begin{bmatrix} a^2\cos(\psi)^2 + b^2\sin(\psi)^2 & (a^2 - b^2)\cos(\psi)\sin(\psi) + iab \\ (a^2 - b^2)\cos(\psi)\sin(\psi) - iab & a^2\sin(\psi)^2 + b^2\cos(\psi)^2 \end{bmatrix}$$

On calcule le quotient e suivant :

$$e = \frac{\operatorname{im}\big(C(\psi, a, b)(0,1)\big) - \operatorname{im}\big(C(\psi, a, b)(1,0)\big)}{\operatorname{tr}\big(C(\psi, a, b)\big)} = \frac{2ab}{a^2 + b^2}$$

Avec im(Y) la partie imaginaire de Y, tr(M) la trace de M, C(0,1) le terme de la matrice C situé à la première ligne et à la deuxième colonne et C(1,0) le terme de la matrice C situé à la deuxième ligne et à la première colonne, car :

[Math. 12]

$$\operatorname{tr}\big(C(\psi, a, b)\big) = a^2(\cos(\psi)^2 + \sin(\psi)^2) + b^2(\cos(\psi)^2 + \sin(\psi)^2) = a^2 + b^2$$

Si la valeur absolue de e est inférieure à 0.5, la polarisation est de type linéaire donc a est égal à 1 et b est égal à 0.
L'angle d'ouverture $\psi$ peut alors être obtenu à l'aide de la formule suivante :

[Math. 13]

$$\tan^{-1}\left(\mathrm{re}\left(\frac{C(\psi,a,b)(1,0)}{C(\psi,a,b)(0,0)}\right)\right) = \tan^{-1}\left(\mathrm{re}\left(\frac{C(\psi,a,b)(1,1)}{C(\psi,a,b)(0,1)}\right)\right) = \psi$$

Avec re(Y) la partie réelle de Y, $\tan^{-1}$ la fonction arc tangente, C(0,0) le terme de la matrice C situé à la première ligne et à la première colonne et C(1,1) le terme de la matrice C situé à la deuxième ligne et à la deuxième colonne, car, comme b est égal à zéro :

[Math. 14]

$$\mathrm{re}\left(\frac{C(\psi,a,b)(1,0)}{C(\psi,a,b)(0,0)}\right) = \mathrm{re}\left(\frac{C(\psi,a,b)(1,1)}{C(\psi,a,b)(0,1)}\right) = \frac{a^2\cos\psi\sin\psi}{a^2\cos\psi} = \tan\psi$$

Si la valeur absolue de e est supérieure à 0.5, la polarisation est de type circulaire.

Si e est négatif, la polarisation est circulaire gauche et a et b ont les valeurs correspondantes dans le tableau précédent.

Si e est positif, la polarisation est circulaire droite et a et b ont les valeurs correspondantes dans le tableau précédent.

## Revendications

1. Procédé (100) de détermination d'une polarisation (P) et d'une direction d'arrivée (is), parmi un ensemble de directions d'arrivée, d'un signal (S) émis par un émetteur (300) à une fréquence (fs) comprise dans une gamme de fréquences, le procédé (100) étant mis en œuvre par un dispositif (200) comportant une unité de calcul (201) et un réseau antennaire (202) comprenant une pluralité d'antennes (203) configurées pour réaliser l'acquisition en simultané du signal (S) et à recevoir et transmettre en simultané le signal acquis sous forme numérique à l'unité de calcul (201), le réseau antennaire (202) possédant un repère (R) pour chaque direction d'arrivée (i) de l'ensemble de directions d'arrivée et pour chaque fréquence de la gamme de fréquences, chaque repère (R) comportant un premier axe et un second axe, le procédé (100) comportant les étapes suivantes :

   - pour chaque antenne (203) du réseau antennaire (202) :
   ◦ recevoir, numériser le signal (S) et transmettre le signal numérisé à l'unité de calcul (201, 101) ;
   - estimer la fréquence (fs) du signal (S) à partir d'au moins un signal numérisé (102) ;
   - regrouper les signaux numérisés au sein d'un vecteur de signaux numérisés H (103) ;
   - pour chaque direction d'arrivée (i) de l'ensemble de directions d'arrivée :

      ◦ décomposer chaque signal numérisé sur le repère (R) correspondant à la direction d'arrivée (i) et à la fréquence estimée (fs) (104) ;
      ◦ regrouper la décomposition de chaque signal numérisé suivant le premier axe du repère (R) dans un premier vecteur, regrouper la décomposition de chaque signal numérisé suivant le second axe du repère (R) dans un second vecteur et créer une matrice X comportant une première ligne correspondant au premier vecteur et une seconde ligne correspondant au second vecteur (105) ;

   - déterminer la direction d'arrivée (is) et la polarisation (P) du signal (S) à l'aide du vecteur de signaux numérisés H et de la matrice X de chaque direction d'arrivée (i) de l'ensemble de directions d'arrivée (110).

2. Procédé (100) selon la revendication 1, **caractérisé en ce que** l'étape (110) de détermination de la direction d'arrivée (is) et de la polarisation (P) du signal (S) comporte les sous-étapes suivantes :

   - pour chaque direction d'arrivée (i) de l'ensemble de directions d'arrivée :

      ◦ calculer la matrice C se définissant comme (106): C = (XX*)$^{-1}$ XH*HX* ;
      ◦ calculer la trace de la matrice C (107) ;

- déterminer la direction d'arrivée (is) du signal (S) se définissant comme la direction d'arrivée (i) de la matrice C de trace maximale (108) ;
- déterminer la polarisation (P) du signal (S) à partir de la matrice C correspondant à la direction d'arrivée (is) du signal (S,109).

3. Procédé (100) selon l'une quelconque des revendications précédentes, **caractérisé en ce que** l'étape (102) d'estimation de la fréquence (fs) du signal (S) est réalisée en calculant la transformée de Fourier d'au moins un signal numérisé.

4. Procédé (100) l'une quelconque des revendications 1 à 2, **caractérisé en ce que** l'étape (102) d'estimation de la fréquence (fs) du signal (S) est réalisée en calculant l'intercorrélation des spectrogrammes de plusieurs signaux numérisés.

5. Procédé (100) selon l'une quelconque des revendications précédentes, **caractérisé en ce que** l'ensemble des directions d'arrivée comporte une pluralité de directions d'arrivée (i) séparées deux à deux par un pas angulaire (θ) donné.

6. Procédé (100) selon l'une quelconque des revendications précédentes, **caractérisé en ce que** la polarisation peut être linéaire ou circulaire.

7. Dispositif (200) permettant la mise en œuvre du procédé (100) selon l'une quelconque des revendications précédentes, **caractérisé en ce qu'**il comporte :

    - un réseau antennaire (202) comportant une pluralité d'antennes (203) configurées pour recevoir simultanément et à numériser des signaux pour les transmettre à une unité de calcul (201) sous forme de signaux numérisés ;
    - une unité de calcul (201) configurée pour réaliser des fonctions de calcul sur des signaux numérisés.

8. Produit programme d'ordinateur comprenant des instructions qui, lorsque le programme est exécuté par un ordinateur, conduisent celui-ci à mettre en œuvre toutes les étapes du procédé (100) selon l'une quelconque des revendications 1 à 6, exceptée l'étape (101) d'acquisition et de numérisation.

9. Support d'enregistrement lisible par ordinateur comprenant des instructions qui, lorsqu'elles sont exécutées par un ordinateur, conduisent celui-ci à mettre en œuvre toutes les étapes du procédé (100) selon l'une quelconque des revendications 1 à 6, exceptée l'étape (101) d'acquisition et de numérisation.

[Fig. 1]

[Fig. 2]

[Fig. 3]

[Fig. 4]

Europäisches Patentamt

European Patent Office

Office européen des brevets

**RAPPORT DE RECHERCHE EUROPEENNE**

Numéro de la demande

EP 19 22 0294

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| A | EP 2 065 716 A1 (LAMBDA 4 GMBH & CO KG [DE]) 3 juin 2009 (2009-06-03) * le document en entier * ----- | 1-9 | INV. G01S3/14 G01S3/04 |
| A | WO 2016/162515 A1 (THALES SA [FR]) 13 octobre 2016 (2016-10-13) * le document en entier * ----- | 1-9 | ADD. G01S3/74 H01Q3/26 |
| A | WO 99/41804 A1 (SCIENCE AND APPLIED TECHNOLOGY [US]; AZZARELLI TEODORO [US] ET AL.) 19 août 1999 (1999-08-19) * le document en entier * ----- | 1-9 | |
| A | RU 2 546 330 C1 (ROSSIJSKAJA FEDERATSIJA OT IM KOTOROJ VYSTUPAET FEDERAL NAJA SLUZHBA O) 10 avril 2015 (2015-04-10) * le document en entier * ----- | 1-9 | |

DOMAINES TECHNIQUES RECHERCHES (IPC)

G01S
H01Q

Le présent rapport a été établi pour toutes les revendications

| Lieu de la recherche | Date d'achèvement de la recherche | Examinateur |
|---|---|---|
| Munich | 24 avril 2020 | Haugg, Sabine |

CATEGORIE DES DOCUMENTS CITES

X : particulièrement pertinent à lui seul
Y : particulièrement pertinent en combinaison avec un
    autre document de la même catégorie
A : arrière-plan technologique
O : divulgation non-écrite
P : document intercalaire

T : théorie ou principe à la base de l'invention
E : document de brevet antérieur, mais publié à la
    date de dépôt ou après cette date
D : cité dans la demande
L : cité pour d'autres raisons

...............................................................................
& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 19 22 0294

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

24-04-2020

| Document brevet cité au rapport de recherche | | Date de publication | Membre(s) de la famille de brevet(s) | | Date de publication |
|---|---|---|---|---|---|
| EP 2065716 | A1 | 03-06-2009 | DE 112008003667 | A5 | 04-11-2010 |
| | | | EP 2065716 | A1 | 03-06-2009 |
| | | | EP 2212705 | A1 | 04-08-2010 |
| | | | WO 2009067997 | A1 | 04-06-2009 |
| WO 2016162515 | A1 | 13-10-2016 | EP 3281026 | A1 | 14-02-2018 |
| | | | FR 3034874 | A1 | 14-10-2016 |
| | | | WO 2016162515 | A1 | 13-10-2016 |
| WO 9941804 | A1 | 19-08-1999 | EP 1055268 | A1 | 29-11-2000 |
| | | | US 5936575 | A | 10-08-1999 |
| | | | WO 9941804 | A1 | 19-08-1999 |
| RU 2546330 | C1 | 10-04-2015 | ---------------------------------------- | | |

EPO FORM P0460

Pour tout renseignement concernant cette annexe : voir Journal Officiel de l'Office européen des brevets, No.12/82